# EUROPEAN PATENT APPLICATION

(11) **EP 4 733 916 A1**
(43) Date of publication of application: **29.04.2026**
(21) Application number: 24843549.7
(22) Date of filing: 19.07.2024
(51) Int. Cl.: G06F 3/04842, G06F 3/04817, G06F 3/0482, G06F 9/451, G06F 3/04883

(54) **ELECTRONIC DEVICE AND RECENT SCREEN DISPLAY METHOD**

(30) Priority: 20.07.2023 KR 20230094824; 16.10.2023 KR 20230137893
(71) Applicant: Samsung Electronics Co., Ltd., Suwon-si, Gyeonggi-do 16677 (KR)
(72) Inventor: JWA, Yeonjoo, Suwon-si, Gyeonggi-do 16677 (KR); SEO, Aejung, Suwon-si, Gyeonggi-do 16677 (KR)
(74) Representative: HGF
(86) International application number: PCT/KR2024/010453
(87) International publication number: WO 2025/018836

(57) **Abstract**

A method for displaying a recent screen of an electronic device of the present disclosure may comprise the operations of: displaying two or more windows on a display; storing the two or more windows as an application group and displaying another task when a first user input for requesting the other task is received; displaying one or more recently used screens and a visual cue related to the stored application group on the recent screen when a second user input for requesting the display of the recent screen is received; and displaying a screen related to the application group on the display when a third user input for the visual cue is received, wherein each of the one or more recently used screens corresponds to an execution screen of one application, and the screen related to the application group corresponds to execution screens of at least two applications.

## Description

### [Technical Field]

The disclosure relates to an electronic device and a recent screen display method.

### [Background Art]

Electronic devices such as a smartphone, a tablet PC, a laptop PC, and a wearable device may include a display. As the size of a display included in an electronic device increases, it has become possible to display multiple application execution screens or windows on the electronic device.

### [Disclosure of Invention]

### [Technical Problem]

During execution of tasks through multiple application screens or windows, a user may temporarily use a home screen or another application. In this case, the multiple application execution screens or windows that were being executed may be in a paused state in the background.

When the user has used the home screen or other applications and then wants to perform a task through the multiple application execution screens or windows again, the user may request the provision of a recently used application list or images (e.g., recent screen) from an electronic device, and then select the multiple application execution screens or windows again. However, the electronic device has a problem in that the multiple application execution screens or windows are not simultaneously displayed on a recent screen, and thus the user has to select an application execution screen or window that has recently been executed, depending on the user's memory.

An electronic device and a recent screen display method of the disclosure may, when a user temporarily uses a home screen or another application while performing a task performed through multiple application execution screens or windows, save the multiple application execution screens or windows as they are and provide the same to the user in response to a request to display a recent screen.

A method for displaying a recent screen of an electronic device according to the disclosure may include displaying two or more windows on a display.

The method for displaying a recent screen of the electronic device according to the disclosure may include, in case that a first user input for requesting another task is received, saving the two or more windows as an application group and displaying the other task.

The method for displaying a recent screen of the electronic device according to the disclosure may include, in case that a second user input for requesting display of a recent screen is received, displaying one or more recently used screens and a visual cue regarding the saved application group on the recent screen.

The method for displaying a recent screen of the electronic device according to the disclosure may include, in case that a third user input for the visual cue is received, displaying a screen regarding the application group on the display, wherein each of the one or more recently used screens corresponds to an execution screen of one application, and the screen regarding the application group corresponds to execution screens of at least two applications.

An electronic device of the disclosure may include a memory.

The electronic device of the disclosure may include a display.

The electronic device of the disclosure may include a processor.

Instructions stored in the memory in the disclosure may, when individually or collectively executed by the at least one processor, cause the electronic device to display two or more windows on the display.

The instructions in the disclosure may, when individually or collectively executed by the at least one processor, cause the electronic device to, in case that a first user input for requesting another task is received, save the two or more windows as an application group and display the other task.

The instructions in the disclosure may, when individually or collectively executed by the at least one processor, cause the electronic device to, in case that a second user input for requesting display of a recent screen is received, display one or more recently used screens and a visual cue regarding the saved application group on the recent screen.

The instructions in the disclosure may, when individually or collectively executed by the at least one processor, cause the electronic device to, in case that a third user input for the visual cue is received, display a screen regarding the application group on the display, wherein each of the one or more recently used screens corresponds to an execution screen of one application, and the screen regarding the application group corresponds to execution screens of at least two applications.

An electronic device and a recent screen display method of the disclosure can save multiple application execution screens or windows as they are and provide the same to a user according to a request to display a recent screen, thereby allowing the user to easily resume a temporarily suspended task.

### [Brief Description of Drawings]

In the description of the drawings, the same or like reference signs may be used for the same or like elements.
FIG. 1 is a block diagram illustrating an electronic device in a network environment according to various embodiments of the disclosure.
FIG. 2 is a block diagram illustrating a program according to various embodiments.
FIG. 3 is a block diagram illustrating an electronic device according to an embodiment of the disclosure.
FIG. 4 is a flowchart illustrating a recent screen display method of an electronic device according to an embodiment of the disclosure.
FIG. 5 illustrates a window display method of an electronic device according to an embodiment of the disclosure.
FIG. 6 illustrates a screen switched when a user input for a first visual cue is received according to an embodiment of the disclosure.
FIG. 7A illustrates a screen switched when a user input for a visual cue is received by an electronic device according to an embodiment of the disclosure.
FIG. 7B illustrates a screen configuration when a first entry point object is selected in screen 701 of FIG. 7A according to an embodiment of the disclosure.
FIG. 7C illustrates a screen configuration when a second entry point object is selected in screen 701 of FIG. 7A according to an embodiment of the disclosure.
FIG. 7D illustrates a screen configuration when a third entry point object is selected in screen 701 of FIG. 7A according to an embodiment of the disclosure. FIG. 8 illustrates an operation of saving a frequently used application group by an electronic device according to an embodiment of the disclosure.
FIG. 9 illustrates an application group saved according to a task request different from an application group saved by a user in an electronic device according to an embodiment of the disclosure.
FIGS. 10A and 10B illustrate a method for saving a frequently used application group, and displaying the saved application group by an electronic device 101 according to an embodiment of the disclosure.
FIG. 11 illustrates a method in which an electronic device saves a frequently used application group and displays the saved application group according to an embodiment of the disclosure.
FIG. 12 illustrates a recent screen display method of an electronic device according to an embodiment of the disclosure when a window corresponding to an application being executed is included in an application group.
FIG. 13 illustrates a recent screen display method of an electronic device according to an embodiment of the disclosure when a window corresponding to an application being executed is included in an application group.
FIG. 14 illustrates a method in which an electronic device displays information on an application group as an icon according to an embodiment of the disclosure.

### [Mode for the Invention]

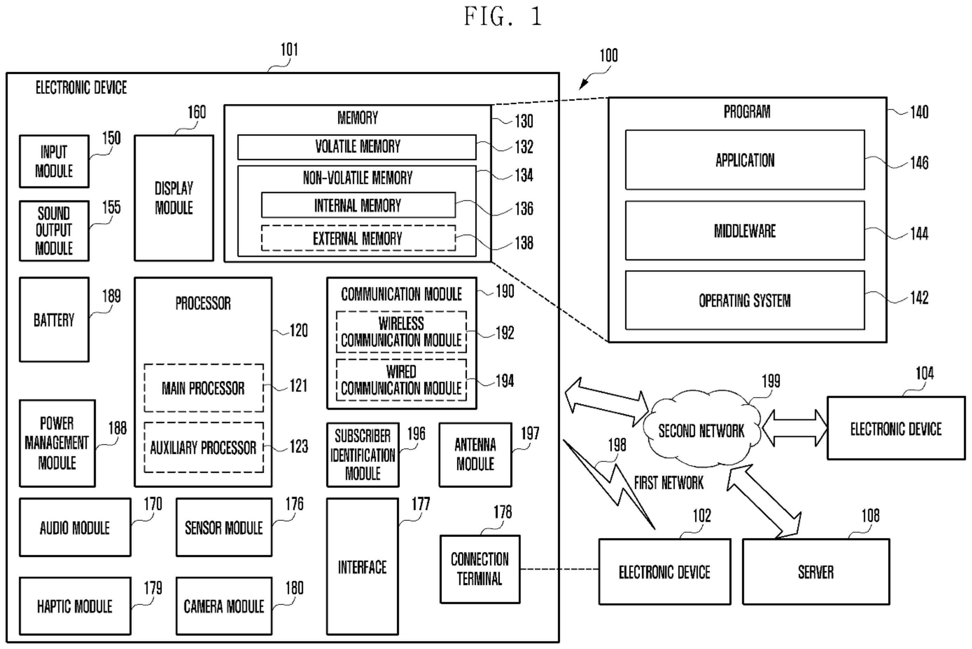

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

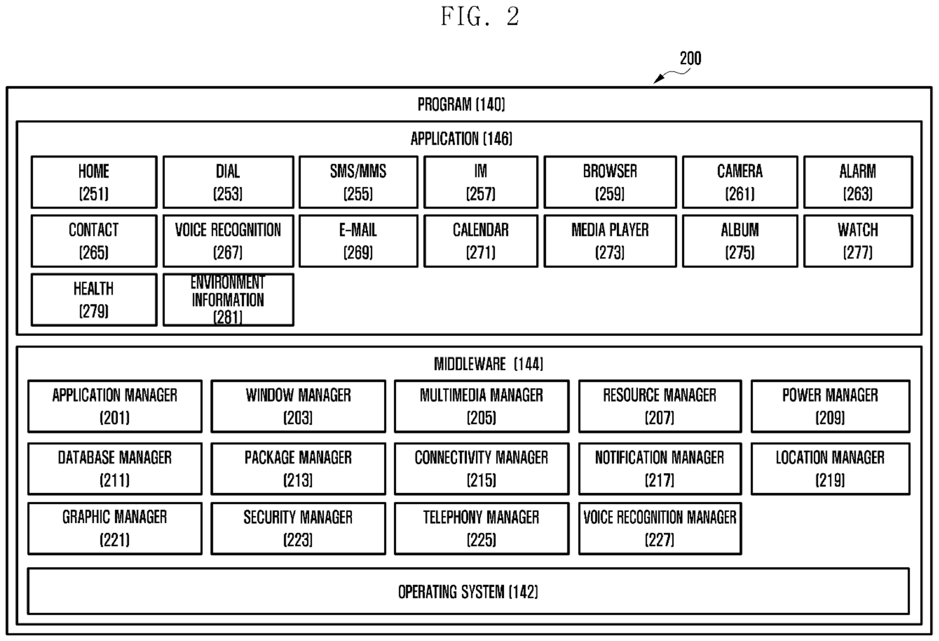

FIG. 2 is a block diagram 200 illustrating a program 140 according to various embodiments.

According to an embodiment, the program 140 may include an operating system 142 for controlling one or more resources of the electronic device 101, middleware 144, or an application 146 executable in the operating system 142. The operating system 142 may include, for example, Android^{™}, iOS^{™}, Windows^{™}, Symbian^{™}, Tizen^{™}, or Bada^{™}. At least some of the programs 140 may be, for example, preloaded in the electronic device 101 at the time of manufacturing, or may be downloaded or updated from an external electronic device (e.g., the electronic device 102 or 104, or the server 108) by a user when the program is used.

The operating system 142 may control management (e.g., allocation or recovery) of one or more system resources (e.g., processes, memory, or power) of the electronic device 101. The operating system 142 may additionally or alternatively include one or more driver programs for driving other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 so that a function or information provided from one or more resources of the electronic device 101 can be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201 may, for example, manage a life cycle of the application 146. The window manager 203 may manage one or more GUI resources used in the screen, for example. The multimedia manager 205 may identify one or more formats necessary for playing the media files, and may perform encoding or decoding of a corresponding media file among the media files by using a codec corresponding to a selected one of the formats, for example. The resource manager 207 may, for example, manage the source code of an application 146 or a space of the memory 130. The power manager 209 may, for example, manage the capacity, temperature, or power of the battery 189, and determine or provide relevant information required for the operation of the electronic device 101 by using the corresponding information among the above. According to an embodiment, the power manager 209 may be integrated with a basic input/output system (BIOS) (not illustrated) of the electronic device 101.

The database manager 211 may, for example, generate, search, or change a database used by the application 146. The package manager 213 may manage installation or updates of applications distributed in the form of package files, for example. The connectivity manager 215 may manage, for example, a wireless connection or a direct connection between the electronic device 101 and an external electronic device. The notification manager 217 may provide a function for notifying a user of the occurrence of a specified event (e.g., an incoming call, a message, or an alarm). The location manager 219 may manage, for example, position information of the electronic device 101. The graphic manager 221 may, for example, manage one or more graphic effects to be provided to a user or a user interface related thereto.

The security manager 223 may, for example, provide system security or user authentication. The telephony manager 225 may, for example, manage a voice call function or a video call function provided by the electronic device 101. The voice recognition manager 227 may, for example, transmit user voice data to the server 108, and receive, from the server 108, a command corresponding to a function to be performed by the electronic device 101, at least partially based on the voice data, or character data converted at least partially based on the voice data. According to an embodiment, the middleware 244 may dynamically delete some of existing components or add new components. According to an embodiment, at least a part of the middleware 144 may be included as a part of the operating system 142, or may be implemented as a separate software different from the operating system 142.

The application 146 may include, for example, a home 251, a dialer 253, SMS/MMS 255, an instant message (IM) 257, a browser 259, a camera 261, an alarm 263, a contact 265, a voice recognition 267, an e-mail 269, a calendar 271, a media player 273, an album 275, a watch 277, a health 279 (e.g., for measuring biometric information such as the amount of exercise or blood sugar levels), or an environmental information 281 (e.g., for measuring atmospheric pressure, humidity, or temperature information) application. According to an embodiment, the application 146 may further include an information exchange application (not illustrated) which can support information exchange between the electronic device 101 and an external electronic device. The information exchange application may include, for example, a notification relay application configured to transfer designated information (e.g., a call, a message, or an alarm) to the external electronic device, or a device management application configured to manage the external electronic device. The notification relay application may transfer notification information corresponding to a specified event (e.g., e-mail reception) generated in another application (e.g., the e-mail application 269) of the electronic device 101 to an external electronic device. Additionally or alternatively, the notification relay application may receive notification information from an external electronic device and provide the same to a user of the electronic device 101.

The device management application may, for example, control the power (e.g., turn-on or turn-off) or functions (e.g., brightness, resolution, or focus) of an external electronic device or a part of the external electronic device (e.g., a display module or a camera module of the external electronic device) that communicates with the electronic device 101. The device management application may, additionally or alternatively, support installation, deletion, or updating of an application operating in the external electronic device.

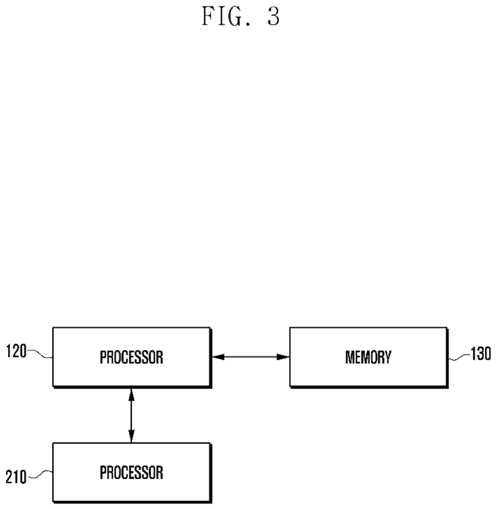

FIG. 3 is a block diagram illustrating an electronic device 101 according to an embodiment of the disclosure.

In an embodiment, the electronic device 101 may include a processor 120, a memory 130, and/or a display 210.

In an embodiment, the processor 120 may control two or more windows to be displayed on the display 210 by using the window manager 203.

In an embodiment, the processor 120 may control one or more windows to be displayed on the display 210 by using the window manager 203.

In an embodiment, the processor 120 may determine whether a first user input requesting another task has been received. For example, other operations may include displaying a home screen, displaying a recent screen, or executing a new application.

In an embodiment, the processor 120 may control the two or more windows to be saved as an application group by using the window manager 203.

In an embodiment, the processor 120 may control the one or more windows to be saved in an application group by using the window manager 203.

In an embodiment, the processor 120 may save the sizes and the positions on a current screen of respective window for the two or more applications by using the window manager 203, and may control a time point at which the sizes and the positions on the current screen of respective window are saved to be saved in the memory 130 or the window manager 203.

In an embodiment, the processor 120 may control a screen regarding the saved application group to be saved in the memory 130 or the window manager 203 by receiving a user input for a user interface for saving.

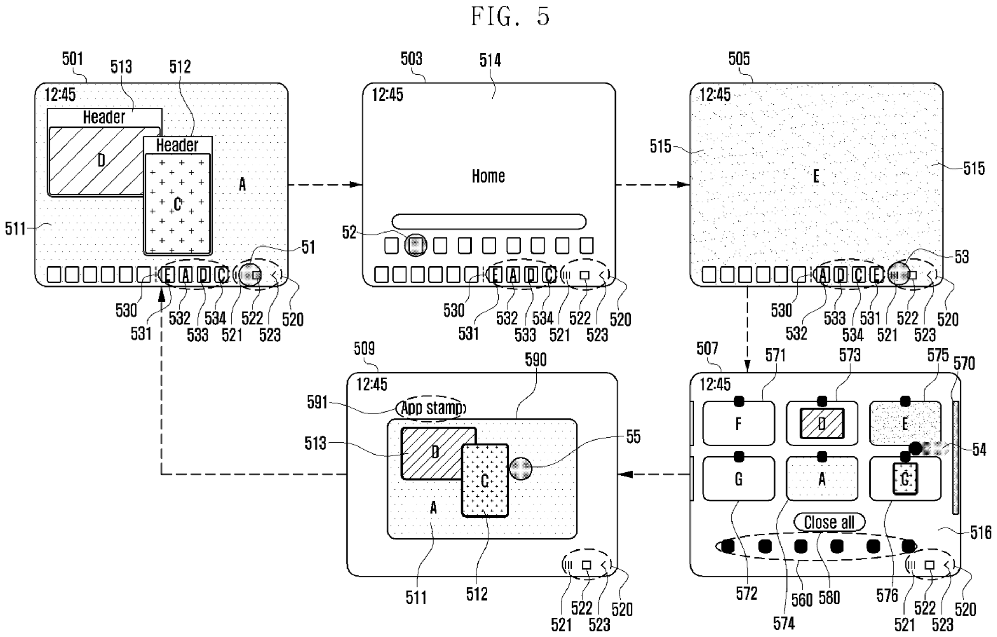

In an embodiment, the processor 120 may control the screen regarding the saved application group to be saved in the memory 130 or the window manager 203 by receiving a user input (e.g., a long press) for a home screen button (e.g., a home screen button 521 of FIG. 5).

In an embodiment, the processor 120 may display another task on the display 210 when a request for the other task is received. For example, the other task may include displaying a home screen, displaying a recent screen, or executing a new application.

In an embodiment, the processor 120 may determine whether a user input requesting to display a recent screen has been received. For example, when receiving a user input for the recent screen button (e.g., the recent screen button 521 in FIG. 2), the electronic device 101 may control, under the control of the processor 120, the recent screen to be displayed on the display 210.

In an embodiment, the processor 120 may control, when displaying the recent screen, a visual cue regarding the saved application group to be displayed.

In an embodiment, the processor 120 may determine whether a user input for the visual cue has been received. When the user input for the visual cue is received, the processor 120 may display, on the display 210, a screen regarding the application group.

In an embodiment, the processor 120 may determine whether a user input for selecting the screen regarding the application group has been received.

In an embodiment, when receiving the user input for selecting the screen regarding the application group, the processor 120 may control the display 210 to display two or more windows corresponding to the saved application group.

In an embodiment, the memory 130 stores instructions for the recent screen display method, and the instructions, when executed by the processor 120, may cause the electronic device 101 to perform an operation of displaying two or more windows on the display 210 by using the window manager 203.

In an embodiment, the memory 130 stores instructions for the recent screen display method, and the instructions, when individually or collectively executed by the at least one processor 120, may cause the electronic device 101 to perform an operation of displaying one or more windows on the display 210 by using the window manager 203.

In an embodiment, the memory 130 stores instructions for the recent screen display method, and the instructions, when individually or collectively executed by the at least one processor 120, may cause the electronic device 101 to perform an operation of determining whether a first user input requesting another task has been received.

In an embodiment, the memory 130 stores instructions for a recent screen display method, and the instructions, when individually or collectively executed by the at least one processor 120, may cause the electronic device 101 to perform an operation of saving the two or more windows as an application group by using the window manager 203.

In an embodiment, the memory 130 stores instructions for the recent screen display method, and the instructions, when individually or collectively executed by the at least one processor 120, may cause the electronic device 101 to perform an operation of saving the one or more windows as an application group by using the window manager 203.

In an embodiment, the memory 130 stores instructions for the recent screen display method, and the instructions, when individually or collectively executed by the at least one processor 120, may cause the electronic device 101 to perform an operation of saving, by using the window manager 203, the sizes and the positions on a current screen of respective window for the two or more applications, and saving a time point at which the sizes and the positions on the current screen of the respective window are saved in the memory 130 or the window manager 203.

In an embodiment, the memory 130 stores instructions for the recent screen display method, and the instructions, when individually or collectively executed by the at least one processor 120, may cause the electronic device 101 to perform an operation of receiving a user input for a user interface for saving, and saving a screen regarding the saved application group in the memory 130 or a window manager 203.

In an embodiment, the memory 130 stores instructions for the recent screen display method, and the instructions, when individually or collectively executed by the at least one processor 120, may cause the electronic device 101 to perform an operation of receiving a user input (e.g., a long press) for a home screen button (e.g., a home screen button 521 in FIG. 5), and saving the screen regarding the application group in the memory 130 or the window manager 203.

In an embodiment, the memory 130 stores instructions for the recent screen display method, and the instructions, when individually or collectively executed by the at least one processor 120, may cause the electronic device 101 to perform an operation of displaying another task on the display 210 when a request for the other task is received.

In an embodiment, the memory 130 stores instructions for the recent screen display method, and the instructions, when individually or collectively executed by the at least one processor 120, may cause the electronic device 101 to perform an operation of determining whether a user input requesting display of a recent screen has been received.

In an embodiment, the memory 130 stores instructions for the recent screen display method, and the instructions, when individually or collectively executed by the at least one processor 120, may cause the electronic device 101 to perform an operation of displaying the recent screen on the display 210 when a user input for a recent screen button (e.g., a recent screen button 521 of FIG. 2) is received.

In an embodiment, the memory 130 stores instructions for the recent screen display method, and the instructions, when individually or collectively executed by the at least one processor 120, may cause the electronic device 101 to perform an operation of displaying, when displaying the recent screen, a visual cue regarding the saved application group.

In an embodiment, the memory 130 stores instructions for the recent screen display method, and the instructions, when individually or collectively executed by the at least one processor 120, may cause the electronic device 101 to perform an operation of determining whether a user input for the visual cue has been received.

In an embodiment, the memory 130 stores instructions for the recent screen display method, and the instructions, when individually or collectively executed by the at least one processor 120, may cause the electronic device 101 to perform an operation of determining whether a user input for selecting a screen regarding the application group has been received.

In an embodiment, the memory 130 stores instructions for the recent screen display method, and the instructions, when individually or collectively executed by the at least one processor 120, may cause the electronic device 101 to perform an operation of displaying the two or more windows corresponding to the saved application group on the display 210 when the user input for selecting the screen regarding the application group is received.

In an embodiment, the display 210 may be the same as the display module 160 of FIG. 1. The display 210 may display a window or an image under the control of the processor 120.

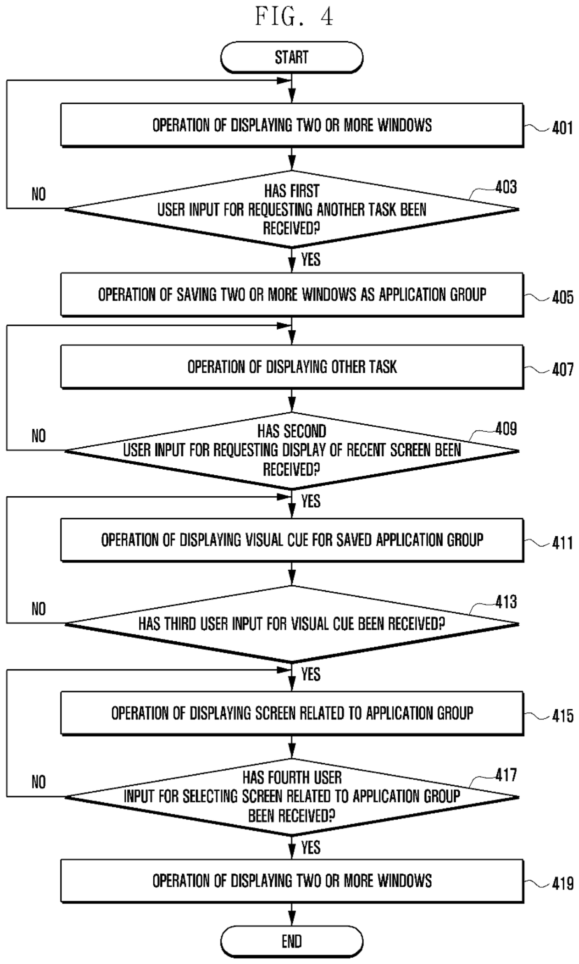

FIG. 4 is a flowchart illustrating a recent screen display method of an electronic device 101 according to an embodiment of the disclosure.

In an embodiment, in operation 401, instructions stored in the memory 130, when executed individually or collectively by the at least one processor 120, may cause the electronic device 101 to display two or more windows on the display 210. For example, the electronic device 101 may display a first window corresponding to a first application and a second window corresponding to a second application on the display 210, under the control of the processor 120. However, the disclosure is not limited thereto, and the instructions stored in the memory 130, when executed individually or collectively by the at least one processor 120, may cause the electronic device 101 to display each window corresponding to an application on the display 210. The instructions stored in the memory 130, when executed individually or collectively by the at least one processor 120, may cause the electronic device 101 to display multiple windows on the display 210.

In an embodiment, in operation 401, the instructions stored in the memory 130, when executed individually or collectively by the at least one processor 120, may cause the electronic device 101 to display one or more windows on the display 210.

In an embodiment, the instructions stored in the memory 130, when executed individually or collectively by the at least one processor 120, may cause the electronic device 101 to save the one or more windows as an application group.

The window may include a task window of an application currently displayed as a pop-up window, a full screen, or a split screen on the display 210.

In an embodiment, in operation 403, the instructions stored in the memory 130, when executed individually or collectively by the at least one processor 120, may cause the electronic device 101 to determine whether a first user input requesting another task has been received. For example, the other task may include displaying a home screen, displaying a recent screen, or executing a new application.

In an embodiment, if a first user input for requesting the other task is received, the electronic device 101 may branch from operation 403 to operation 405.

In an embodiment, if the electronic device 101 has not received the first user input requesting the other task, the electronic device 101 may branch to operation 401 from operation 403.

In an embodiment, the instructions stored in the memory 130, when executed individually or collectively by the at least one processor 120, may cause the electronic device 101 to, when receiving a request to execute a new application, stop a running application, and display a user interface (e.g., an execution screen or a window) for the new application in the foreground.

In an embodiment, the electronic device 101 may include virtual control buttons (e.g., virtual control buttons 520 of FIG. 2) in at least a part of a screen displayed on the display 210. The virtual control buttons (e.g., the virtual control buttons 520 in FIG. 2) may include a recent screen button (e.g., the recent screen button 521 in FIG. 2), a home screen button (e.g., a home screen button 522 in FIG. 2), and a back button (e.g., a back button 523 in FIG. 2).

In an embodiment, the instructions stored in the memory 130, when executed individually or collectively by the at least one processor 120, may cause the electronic device 101 to display the recent screen when a user input for the recent screen button (e.g., the recent screen button 521 in FIG. 2) is received. For example, the instructions stored in the memory 130, when executed individually or collectively by the at least one processor 120, may cause the electronic device 101 to display the recent screen when a user input for the recent screen button (e.g., the recent screen button 521 of FIG. 2) is received.

In an embodiment, when a request for another task (e.g., displaying a home screen) is made in a state in which respective windows for two or more applications are displayed, the electronic device 101 may save a time point at which the windows for the two or more applications are displayed, the positions on the display 210 of the respective windows, and the sizes of the respective windows as an application group. When a request for another task (e.g., displaying a home screen) is made in a state in which respective windows for two or more applications are displayed, the instructions stored in the memory 130, when executed individually or collectively by the at least one processor 120, may cause the electronic device 101 to save screens of current applications and save a time point at which the screens are saved. When there is a recent screen display request, the electronic device 101 may display, on the display 210, a user interface in a reduced form of a screenshot, information on the name of the application group, and text information relating to a time point at which the screen is saved.

In an embodiment, the instructions stored in the memory 130, when executed individually or collectively by the at least one processor 120, may cause the electronic device 101 to display a home screen when a user input for the home screen button (the home screen button 522 in FIG. 2) is received. The home screen may be a home screen or a start screen of the electronic device 101, and may be a main screen of the electronic device 101. The home screen may include application links or shortcuts (e.g., icons) that may be arranged across multiple pages. The application links or shortcuts (e.g., icons) may display static information relating to an application and/or dynamic information including a current state of the application. The home screen may provide a method for a user to access a phone function. The home screen may include a dock on the screen or at the edge of the screen.

In an embodiment, the instructions stored in the memory 130, when executed individually or collectively by the at least one processor 120, may cause the electronic device 101 to display a previous screen of an application currently displayed on the display 210 when a user input for the back button (the back button 521 of FIG. 2) is received.

In an embodiment, in operation 405, the instructions stored in the memory 130, when executed individually or collectively by the at least one processor 120, may cause the electronic device 101 to save the two or more windows as an application group.

In an embodiment, when a request for another task is received, the instructions stored in the memory 130, when executed individually or collectively by the at least one processor 120, may cause the electronic device 101 to, in operation 405, save the sizes and the positions on the current screen for the windows for the two or more applications, and save, in the memory 130 or the window manager 203, a time point at which the sizes and the positions on the current screen for the respective windows are saved.

In an embodiment, in operation 407, the instructions stored in the memory 130, when executed individually or collectively by the at least one processor 120, may cause the electronic device 101 to display the other task on the display 210. For example, the other task may include displaying a home screen, displaying a recent screen, or running a new application.

In an embodiment, the instructions stored in the memory 130, when executed individually or collectively by the at least one processor 120, may cause the electronic device 101 to perform operation 405 and operation 407 simultaneously when the first user input for requesting the task is received.

In an embodiment, in operation 409, the instructions stored in the memory 130, when executed individually or collectively by the at least one processor 120, may cause the electronic device 101 to determine whether a second user input for requesting to display the recent screen has been received. For example, the instructions stored in the memory 130, when executed individually or collectively by the at least one processor 120, may cause the electronic device 101 to display a recent screen when a user input for the recent screen button (e.g., the recent screen button 521 in FIG. 2) is received.

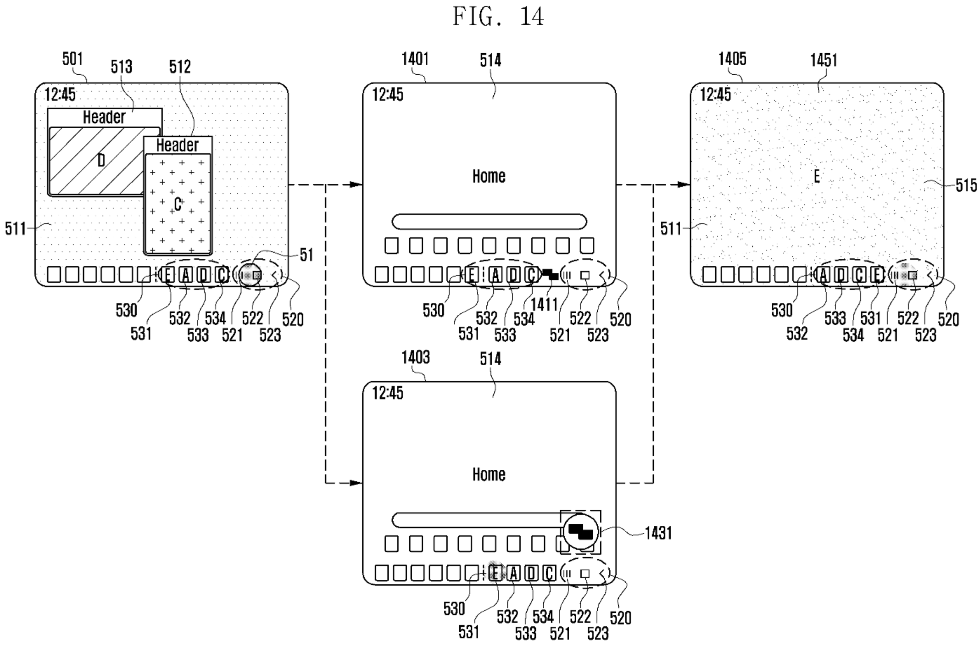

In an embodiment, in operation 409, the instructions stored in the memory 130, when executed individually or collectively by the at least one processor 120, may cause the electronic device 101 to save the application group together with the home screen 514, and display, on the display 210, an application group icon (e.g., an application icon 1411 or a floating application group icon 1431 in FIG. 14) which can immediately display the application group when the user input is received. The group icon (e.g., the application icon 1411 in FIG. 14) may be displayed on a taskbar or may be floated and displayed on the display 210.

In an embodiment, in operation 409, the instructions stored in the memory 130, when executed individually or collectively by the at least one processor 120, may cause the electronic device 101 to omit operations 411 and 413 and branch to operation 415 when a user input for the application group icon is received.

In an embodiment, when the second user input for requesting the display of the recent screen is received, the electronic device 101 may branch from operation 409 to operation 411.

In an embodiment, when the second user input for requesting display of the recent screen is not received, the electronic device 101 may branch from operation 409 to operation 407.

In an embodiment, in operation 411, the instructions stored in the memory 130, when executed individually or collectively by the at least one processor 120, may cause the electronic device 101 to display a visual cue regarding the saved application group on the recent screen. The visual cue may be included in at least a part of the recent screen being displayed on the display 210. The visual cue may be displayed at the edge of the screen being displayed on the display 210. The visual cue may include a user interface (e.g., a GUI such as a bookmark) for the saved application group.

In an embodiment, in operation 411, the instructions stored in the memory 130, when executed individually or collectively by the at least one processor 120, may cause the electronic device 101 to display, on the display 210, the visual cue related to the saved application group on the recent screen and a list or history of recently used screens (e.g., recently used screens 571, 572, 573, 574, and 575). The list or history of recently used screens may be displayed in a resized window, and the recently used screens may be listed on the display 210.

In an embodiment, in operation 413, the instructions stored in the memory 130, when executed individually or collectively by the at least one processor 120, may cause the electronic device 101 to determine whether a third user input for a visual cue has been received. The third user input for the visual cue may be, for example, a user input of swiping the visual cue. However, the third user input for the visual cue is not limited thereto, and may be, for example, an operation of tapping the visual cue.

In an embodiment, when the third user input for the visual cue is received, the electronic device 101 may branch from operation 413 to operation 415.

In an embodiment, when the third user input for the visual cue is not received, the electronic device 101 may branch from operation 413 to operation 411.

In an embodiment, the instructions stored in the memory 130, when executed individually or collectively by the at least one processor 120, may cause the electronic device 101 to display a screen for the application group on the display 210.

In an embodiment, the screen for the application group may include information on a screen in which a window for each of the two or more applications is displayed before receiving the first user input.

In an embodiment, the application group may include information on the position on the display 210 for each window and information on the size of each window.

In an embodiment, when a request for another task (e.g., display of a home screen) is made in a state in which the window for each of the two or more applications is displayed, the instructions stored in the memory 130, when executed individually or collectively by the at least one processor 120, may cause the electronic device 101 to save screens of current applications and save a time point at which the screens are stored.

In an embodiment, when displaying the screen for the application group, the instructions stored in the memory 130, when executed individually or collectively by at least one processor 120, may cause the electronic device 101 to, in operation 415, display, on the display 210, a user interface in a reduced form of a screenshot, information on the name of the application group, and text information relating to the time point at which the screen is saved.

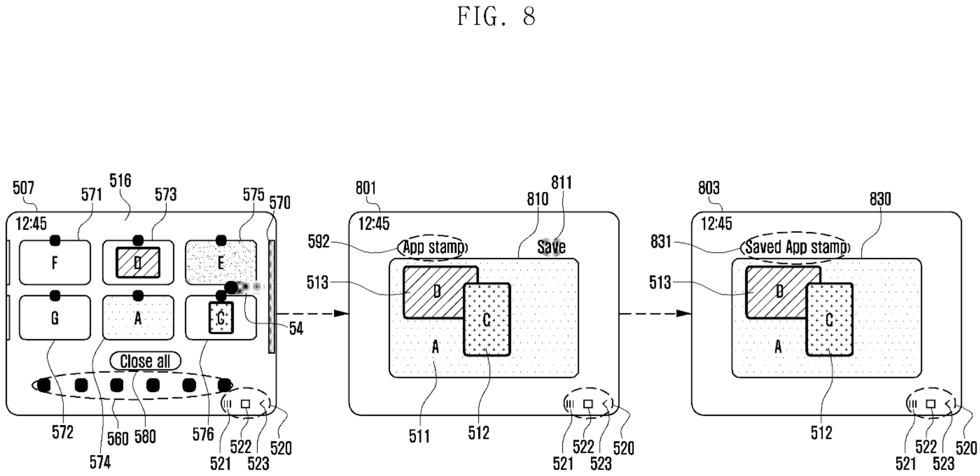

In an embodiment, when displaying the screen for the application group, the instructions stored in the memory 130, when executed individually or collectively by at least one processor 120, may cause the electronic device 101 to, in operation 415, receive a user input for a user interface for saving (e.g., a user interface 811 for saving in FIG. 8), and prioritize to display, on the display 210, a screen for the saved application group (e.g., a screen 830 for a sixth application group) for the other task, over the saved application group (e.g., a screen 710 for a second application group).

In an embodiment, when displaying the screen for the application group, the instructions stored in the memory 130, when executed individually or collectively by at least one processor 120, may cause the electronic device 101 to, in operation 415, receive a user input for a user interface for saving (e.g., a user interface 811 for saving in FIG. 8), and control to prevent a screen for the saved application group (e.g., a screen 830 for a sixth application group) from being deleted at a predetermined period or randomly, thereby displaying the screen on the display 210.

In an embodiment, when displaying the screen for the application group, the instructions stored in the memory 130, when executed individually or collectively by at least one processor 120, may cause the electronic device 101 to, in operation 415, receive a user input (e.g., a long press) for a home screen button, and prioritize to display, on the display 210, a screen for the saved application group (e.g., a screen 830 for a sixth application group) for the other task, over the saved application group (e.g., a screen 710 for a second application group).

In an embodiment, when displaying the screen for the application group, the instructions stored in the memory 130, when executed individually or collectively by at least one processor 120, may cause the electronic device 101 to, in operation 415, if there is a window corresponding to the currently executed application among the windows included in the screen for the application group, display the screen for the application group by hiding the window corresponding to the currently executed application.

In an embodiment, displaying the screen for the application group, the instructions stored in the memory 130, when executed individually or collectively by at least one processor 120, may cause the electronic device 101 to, in operation 415, if there is a window corresponding to the currently executed application among the windows included in the screen for the application group, display a user interface 1233 and/or a visual effect 1231 highlighting the window corresponding to the currently executed application. The visual effect 1231 may include displaying that the current application is being executed on the window by color or animation.

In operation 415, the screen for the application group has been illustrated as a screen for one application group, but the screen for the application group is not limited thereto, and may include multiple screens for application groups (e.g., multiple screens for application groups 590, 710, and 740). The instructions stored in the memory 130, when executed individually or collectively by the at least one processor 120, may cause the electronic device 101 to update and delete the screens for the saved multiple application groups (e.g., the screens 590, 710, and 740 for multiple application groups) at a predetermined period (e.g., a period of 1 day).

In an embodiment, the instructions stored in the memory 130, when executed individually or collectively by the at least one processor 120, may cause the electronic device 101 to determine whether a fourth user input for selecting the screen for the application group has been received, in operation 417.

In an embodiment, when receiving a fourth user input for selecting the screen for the application group, the electronic device 101 may branch from operation 417 to operation 419.

In an embodiment, when the fourth user input for selecting the screen for the application group is not received, the electronic device 101 may branch from operation 417 to operation 415.

In an embodiment, the fourth user input may include, for example, an input for tapping the screen for the application group.

In an embodiment, in operation 419, the instructions stored in the memory 130, when executed individually or collectively by the at least one processor 120, may cause the electronic device 101 to display two or more windows corresponding to the saved application group on the display 210.

In an embodiment, the instructions stored in the memory 130, when executed individually or collectively by the at least one processor 120, may cause the electronic device 101 to omit operation 417 and operation 419.

FIG. 5 illustrates a window display method of an electronic device 101 according to an embodiment of the disclosure.

In screen 501, the electronic device 101 may display two or more windows on the display 210. A first window 511 corresponding to an execution screen of a first application may be displayed as a full screen. A second window 512 corresponding to an execution screen of a second application may be displayed as a pop-up window overlapping onto the first window 511. A third window 513 corresponding to an execution screen of a third application may be displayed as a pop-up window overlapping onto the first window 511, and at least a part of the third window 513 may overlap onto the second window 512.

In screen 501, the electronic device 101 may display virtual control buttons 520 and/or application icons 530 on the display 210. The virtual control buttons 520 and/or application icons 530 may be arranged in a dock format at the edges or bottom of the screen 501. The virtual control buttons 520 and/or application icons 530 may be displayed in the taskbar.

In an embodiment, the virtual control buttons 520 may include a recent screen button 521, a home screen button 522, and a back button 523.

In an embodiment, instructions stored in the memory 130, when executed individually or collectively by the at least one processor 120, may cause the electronic device 101 to display a recent screen when receiving a user input for a recent screen button (e.g., the recent screen button 521 of FIG. 2). For example, the recent screen may include recently used screens (e.g., recently used screens 571, 572, 573, 574, and 575 in FIG. 5). The recently used screens may include a window, a pop-up window, and/or a home screen.

In an embodiment, the instructions stored in the memory 130, when executed individually or collectively by the at least one processor 120, may cause the electronic device 101 to display a home screen when a user input for the home screen button (the home screen button 522 of FIG. 2) is received.

In an embodiment, the instructions stored in the memory 130, when executed individually or collectively by the at least one processor 120, may cause the electronic device 101 to display a previous screen of an application currently displayed on the display 210 when receiving a user input for a back button (the back button 521 of FIG. 2).

In an embodiment, the application icons 530 may include icons 531, 532, 533, and 534 corresponding to an application being executed in the foreground and/or an application being paused in the background. The icons 531, 532, 533, and 534 may include representative images of applications executed in the foreground and/or applications suspended in the background.

In screen 501, while displaying two or more windows on the display 210, the electronic device 101 may receive a user input 51 for a request to display a home screen (e.g., another task). For example, the user input for the home screen button 522 may be the same as the user input 51 for the request to display the home screen (e.g., another task).

In an embodiment, when the user input 51 for the request to display the home screen (e.g., another task) is received, the instructions stored in the memory 130, when executed individually or collectively by the at least one processor 120, may cause the electronic device 101 to save the sizes and the positions on a current screen for the first window 511, the second window 512, and the third window 513, and save, in the memory 130 or the window manager 203, a time point at which the sizes and the positions on the current screen for the first window 511, the second window 512, and the third window 513 are saved.

In an embodiment, when the user input 51 for the request to display the home screen (e.g., another task) is received, the instructions stored in the memory 130, when executed individually or collectively by the at least one processor 120, may cause the electronic device 101 to save the sizes and the positions on the current screen for the first window 511, the second window 512, and the third window 513 as an application group. The application group may include a screenshot for the sizes and the positions on the current screen for the first window 511, the second window 512, and the third window 513.

When the electronic device 101 receives the user input 51 for the request to display the home screen (e.g., another task) in screen 503, the electronic device 101 may display the home screen 514 on the display 210. At least a part of the home screen 514 may include virtual control buttons 520 and/or application icons 530.

In screen 503, while the home screen 514 is being displayed, the electronic device 101 may display, on the display 210, an icon corresponding to a fourth application. A user input 52 for an icon corresponding to the fourth application may be received.

When the user input 52 for the icon corresponding to the fourth application is received in the screen 505, the fourth window 515 may be displayed in full screen. While displaying the fourth window 515, the electronic device 101 may receive a user input 53 for a request to display a recent screen. For example, a user input for the recent screen button 521 may be the same as the user input 53 for the request to display the recent screen.

In screens 503 and 505, the electronic device 101 may display the virtual control buttons 520 and/or application icons 530 on the display 210. The virtual control buttons 520 and/or application icons 530 may be arranged in a dock format at the edges or bottom of the screen 503 or 505. The virtual control buttons 520 and/or application icons 530 may be displayed in the taskbar.

In screen 507, when receiving the user input for the request to display the recent screen, the electronic device 101 may display a recent screen 516 on the display 210.

In an embodiment, the recent screen 516 may include a first visual cue 570 and recently used screens 571, 572, 573, 574, and 575.

In an embodiment, the recently used screens 571, 572, 573, 574, and 575 may display representative images (e.g., icons) indicating at least a part of task details and each of the applications. The recent screen may, for example, include a user screen for all applications used before a "Close all" (580) command for the first visual cue 570 and the recently used screens 571, 572, 573, 574, and 575 is received. However, the electronic device 101 is not limited thereto, and the instructions stored in the memory 130, when executed individually or collectively by the at least one processor 120, may cause the electronic device 101 to delete the first visual cue 570 and the recently used screens 571, 572, 573, 574, and 575 for a used application at a predetermined period (e.g., once a day).

In an embodiment, the recent screen 516 may include a "Close all" 580 and an icon collection 560 corresponding to the recently used screens 571, 572, 573, 574, and 575. When an application corresponding to the icon collection 560 is selected, the electronic device 101 may display a window corresponding to the selected application on the display 210.

In an embodiment, the instructions stored in the memory 130, when executed individually or collectively by the at least one processor 120, may cause the electronic device 101 to delete the first visual cue 570 and the recently used screens 571, 572, 573, 574, and 575 when a user input for the "Close all" 580 is received. The "Close all" 580 may be a virtual button displayed on the display 210.

When a user input 54 for the first visual cue 570 is received in screen 507, the screen may be switched to screen 509. The first visual cue 570 may be an affordance interface for the saved application group. The electronic device 101 may display a first visual cue 570 implying that the saved application group exists in the recent screen 516, thereby inducing an action of a user.

When the user input 54 for the first visual cue 570 is received on the screen 509, the electronic device 101 may display a screen 590 related to a first application group. The screen 590 for the first application group may include a resized (e.g., reduced) version of screen 501.

When the user input for the first visual cue 570 is received in screen 509, the electronic device 101 may display the screen 590 for the first application group in the form of an icon.

The screen 590 for the first application group in the screen 509 may include information 591 on a name of the application group. The screen 590 for the first application group may include the resized first window 511, the resized second window 512, and the resized third window 513. The positions and sizes of the resized first window 511, the resized second window 512, and the resized third window 513 may be adjusted by a ratio, based on the positions and sizes of the first window 511, the second window 512, and the third window 513 displayed in screen 501.

When a user input 55 for selecting the screen 590 for the first application group is received in screen 509, screen 501 may be displayed.

In screens 507 and 509, the electronic device 101 may display virtual control buttons 520 on the display 210. The virtual control buttons 520 may be arranged in the form of a dock at the edge or the bottom of screen 507 or screen 509.

However, the disclosure is not limited thereto, and while displaying the fourth window 515, if the electronic device 101 receives a user input 53 for a request to display the recent screen, the electronic device 101 may display the recently used screens 571, 572, 573, 574, and 575 and the screen 590 for the first application group simultaneously without displaying the first visual cue 570.

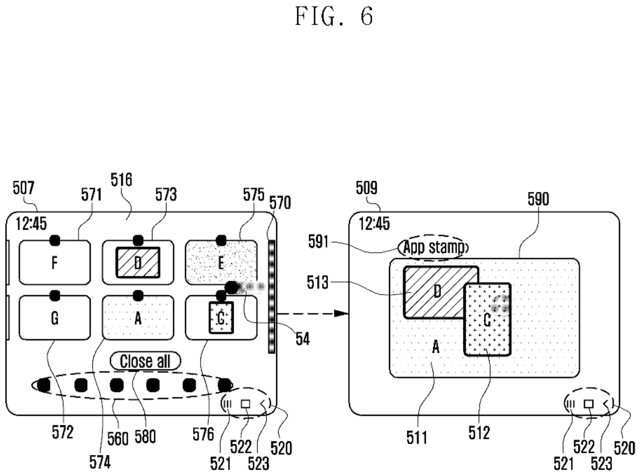

FIG. 6 illustrates a screen switched when a user input for a first visual cue 570 is received according to an embodiment of the disclosure.

Screens 507 and 509 of FIG. 6 may be the same as screen 507 of FIG. 5 and the screen 509 of FIG. 5.

In screen 507, a recent screen 516 may include a first visual cue 570 and recently used screens 571, 572, 573, 574, and 575. A screen 590 for a first application group in screen 509 may include a screen obtained by resizing (e.g., reducing) screen 501. The screen 590 for the first application group may include information 591 on a name of an application group. The screen 590 for the first application group may include a resized first window 511, a resized second window 512, and a resized third window 513. The positions and sizes of the resized first window 511, the resized second window 512, and the resized third window 513 may be adjusted by a ratio, based on the positions and sizes of the first window 511, the second window 512, and the third window 513 displayed in screen 501.

In an embodiment, when the electronic device 101 receives a user input for the first visual cue 570, the electronic device 101 may display screen 509. A user input 54 for the first visual cue 570 may be swiping a touch input in the opposite direction to the edge of the display 210 on which the first visual cue 570 is displayed. However, the disclosure is not limited thereto, and a touch input (e.g., a tap or press operation) for the first visual cue 570 may be included.

In an embodiment, the electronic device 101 may include a screen 590 for a first application group for a single first visual cue 570. However, the disclosure is not limited thereto, and in an embodiment, the electronic device 101 may include a screen 590 for multiple first application groups for a single first visual cue 570.

In an embodiment, the electronic device 101 may include a screen 590 for at least one first application group which is not displayed on the screen. The first visual cue 570 may be a user interface for inducing a user to touch or use the screen 590 for the at least one first application group which is not displayed on the screen.

In screens 507 and 509, the electronic device 101 may display virtual control buttons 520 on the display 210. The virtual control buttons 520 may be arranged at the edge or the bottom of screen 507 or screen 509 in the form of a dock. The virtual control buttons 520 and/or application icons 530 may be displayed in the taskbar.

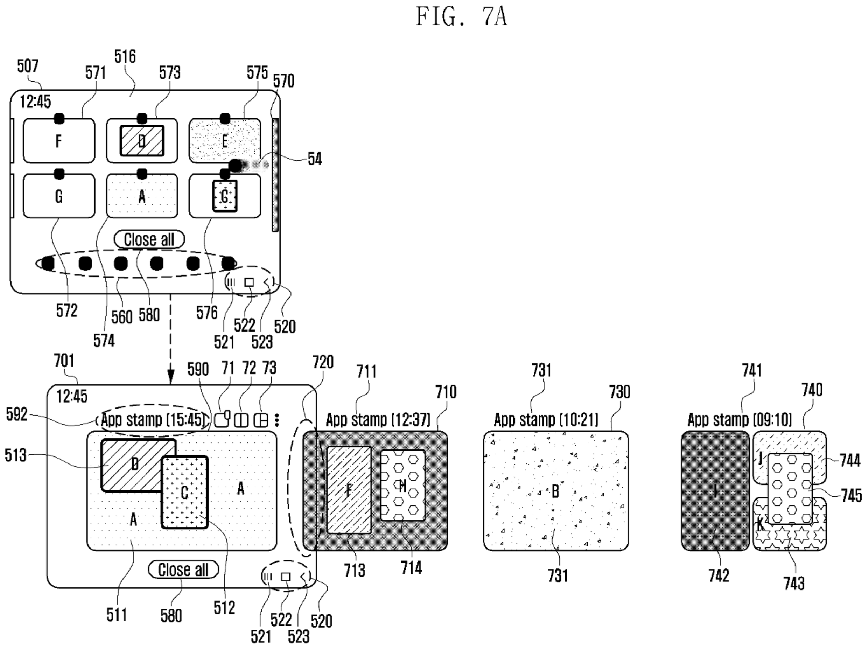

FIG. 7A illustrates a screen switched when a user input for a visual cue is received by an electronic device 101 according to an embodiment of the disclosure.

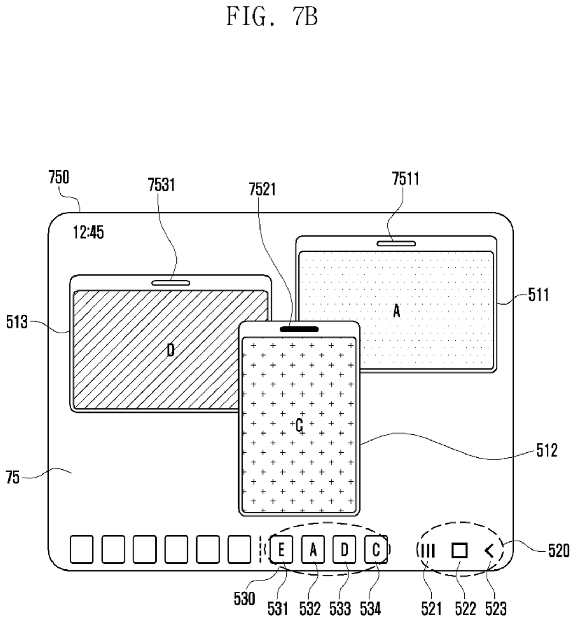

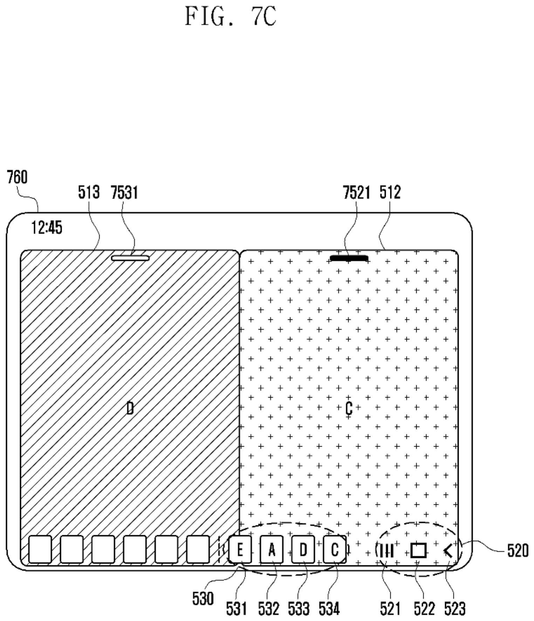

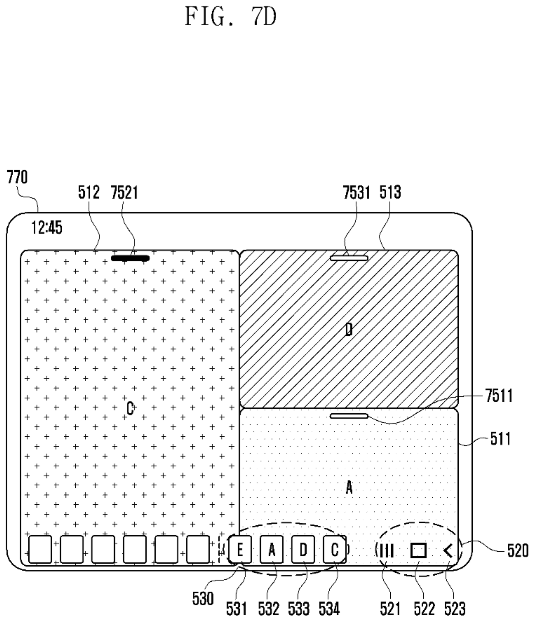

FIG. 6 illustrates a screen 590 for one first application group, but FIG. 7 illustrates screens 590, 710, and 730 for multiple application groups.

Screen 507 of FIG. 7A may be the same as screen 507 of FIG. 5.

In screen 507, the recent screen 516 may include a first visual cue 570 and recent usage screens 571, 572, 573, 574, and 575. When a user input 54 for the first visual cue 570 is received in screen 507, the instructions stored in the memory 130, when executed individually or collectively by the at least one processor 120, may cause the electronic device 101, under control, to switch to screen 701.

Referring to screen 701, the instructions stored in the memory 130, when executed individually or collectively by the at least one processor 120, may cause the electronic device 101 to save the screens 590, 710, and 740 for multiple application groups in the memory 130 or the window manager 203. The instructions stored in the memory 130, when executed by the at least one processor 120, may cause the electronic device 101 to update and delete the screens 590, 710, and 740 for the saved multiple application groups at a predetermined period (e.g., a period of one day). The screens 590, 710, and 740 for the saved multiple application groups may save not only names of the application groups but also the saved time points, and when there is a request to display a recent screen, not only each of the windows but also the names of the application groups and the saved time points may be displayed. A user may identify the names of the application groups and the saved time points to identify applications that are used and time points at which the applications are used, and use the same.

In screen 701, when receiving a user input 54 for the first visual cue 570, the electronic device 101 may display a screen 590 for a first application group and a second visual cue 720. The screen 590 for the first application group may include a screen obtained by resizing (e.g., reducing) screen 501. The screen 590 for the first application group may include a name of the application group, information 592 on a saved time (e.g., app stamp (15:45)), and at least one entry point object 71, 72, or 73. The app stamp may be changed according to the name of the application group. The screen 590 for the first application group may include a resized first window 511, a resized second window 512, and a resized third window 513. The position and size of the resized first window 511, the resized second window 512, and the resized third window 513 may be adjusted by a ratio, based on the positions and sizes of the first window 511, the second window 512, and the third window 513 displayed in screen 501.

In an embodiment, the at least one entry point object 71, 72, or 73 may be an icon that implies a screen configuration to be displayed on the display 210.

In an embodiment, the first entry point object 71 may be an icon that implies configuration of the screen 590 for the first application group as a pop-up screen. The second entry point object 72 may be, for example, an icon that implies configuration of the screen 590 for the first application group as a dual-split screen. The third entry point object 73 may be, for example, an icon that implies configuration of the screen 590 for the first application group as a triple-split screen.

FIG. 7B illustrates a screen configuration when a first entry point object 71 is selected in screen 701 of FIG. 7A according to an embodiment of the disclosure.

When the first entry point object 71 is selected in screen 701 of FIG. 7A, the first window 511, the second window 512, and the third window 513 that constitute the screen 590 for the first application group may be displayed as pop-up windows on the background (or wallpaper) 75. Referring to screen 750, the electronic device 101 may cause the processor 120 to control the display 210 to display the first window 511, the second window 512, and the third window 513 as pop-up windows on the background (or wallpaper) 75.

In an embodiment, the first window 511 may display, at at least a portion of the first window, a focus handle bar 7511 indicating whether or not the window is activated. The second window 512 may display a focus handle bar 7521 at at least a portion of the second window. The third window 513 may display a focus handle bar 7531 at at least a portion of the third window. For example, the focus handle bar 7531 may be highlighted and displayed for the most recently executed window.

FIG. 7C illustrates a screen configuration when a second entry point object 72 is selected in screen 701 of FIG. 7A according to an embodiment of the disclosure.

When the second entry point object 72 is selected in screen 701 of FIG. 7A, at least two of the first window 511, the second window 512, and the third window 513, which constitute the screen 590 for the first application group, may be displayed in a dual-split window. In this case, the windows displayed in the dual split window among the first window 511, the second window 512, and the third window 513 constituting the screen 590 for the first application group may be selected according to the latest execution order. The instructions stored in the memory 130, when executed individually or collectively by the at least one processor 120, may cause the electronic device 101 to select two windows having the highest more recent execution order among the first window 511, the second window 512, and the third window 513, and display the two windows in a dual-split window on the display 210. For example, referring to screen 760, if the second window 512 and the third window 513 are windows corresponding to applications executed more recently than the first window 511, the instructions stored in the memory 130, when executed individually or collectively by the at least one processor 120, may cause the electronic device 101 to select the second window 512 and the third window 513 among the first window 511, the second window 512, and the third window 513 and display the selected windows in a dual-split window on the display 210. The second window 512 may display a focus handlebar 7521 at at least a portion of the second window. The third window 513 may display a focus handle bar 7531 at at least a portion of the third window. For example, the focus handlebar 7531 may be highlighted and displayed for the most recently executed window.

FIG. 7D illustrates a screen configuration when a third entry point object 73 is selected in screen 701 of FIG. 7A according to an embodiment of the disclosure.

When the third entry point object 73 is selected in screen 701 of FIG. 7A, the first window 511, the second window 512, and the third window 513 constituting screen 590 for the first application group may be displayed in a triple-split window. The instructions stored in the memory 130, when executed individually or collectively by the at least one processor 120, may cause the electronic device 101 to display the first window 511, the second window 512, and the third window 513 in a triple-split window on the display 210. For example, referring to screen 770, the instructions stored in the memory 130, when executed individually or collectively by the at least one processor 120, may cause the electronic device 101 to display the first window 511, the second window 512, and the third window 513 in a triple-split window on the display 210. The first window 511 may display, at at least a portion of the first window, a focus handlebar 7511 indicating whether the window is activated. The second window 512 may display a focus handlebar 7521 at at least a portion of the second window. The third window 513 may display a focus handle bar 7531 at at least a portion of the third window. For example, the focus handlebar 7531 may be highlighted and displayed for the most recently executed window. In an embodiment, the second visual cue 720 may indicate that there are screens 720, 730, and 740 for additional application groups, in addition to the screen 590 for the currently displayed first application group. The second visual cue 720 may be a user interface for inducing a user to touch or use a screen 710, 730, or 740 for at least one application group that is not displayed on the screen. The second visual cue 720 may be the same as the first visual cue 570.

In an embodiment, the screen 710 for a second application group may include a fourth window 713 and a fifth window 714. When a request to display another task (e.g., a home screen) occurs during the use of applications for the fourth window 713 and the fifth window 714 are used, the screen 710 for the second application group may save, in the memory 130 or the window manager 203, a time point at which the request occurs and the application group. The screen 710 for the second application group may include information 711 (e.g., app stamp (12:37)) on the name of the application group and the saved time point. The app stamp may be changed according to the name of the application group.

In an embodiment, the screen 730 for the third application group may include a window 731 executed in a full screen. In an embodiment, the windows saved as an application group are described with reference to two or more windows, but the disclosure is not limited thereto, and one or more windows may also be saved as an application group.

In an embodiment, when a request to display another task (e.g., a home screen) occurs during the use of an application for the window 731 displayed in the full screen, with respect to the screen 730 for the third application group, the electronic device 101 may save, in the memory 130 or the window manager 203, a time point at which the request occurs and the application group. The screen 730 for the third application group may include information 731 on the name of the application group and the saved time point (e.g., app stamp (10:21)). The app stamp may be changed according to the name of the application group.

In an embodiment, the screen 740 for the fourth application group may include windows 742, 743, and 744 displayed in a split screen and a pop-up window 745. The screen 740 for the fourth application group may include information 741 (e.g., app stamp (09:10)) on the name of the application group and the saved time point. The app stamp may be changed according to the name of the application group.

In screens 507 and 701, the electronic device 101 may display virtual control buttons 520 on the display 210. The virtual control buttons 520 may include a recent screen button 521, a home screen button 522, and a back button 523.

In screen 507, the electronic device 101 may display a "Close all" 580 and an icon collection 560 corresponding to recently used screens 571, 572, 573, 574, and 575 on the display 210.

In screen 701, the electronic device 101 may display the "Close all" 580 on the display 210.

FIG. 8 illustrates an operation of saving a frequently used application group by an electronic device 101 according to an embodiment of the disclosure.

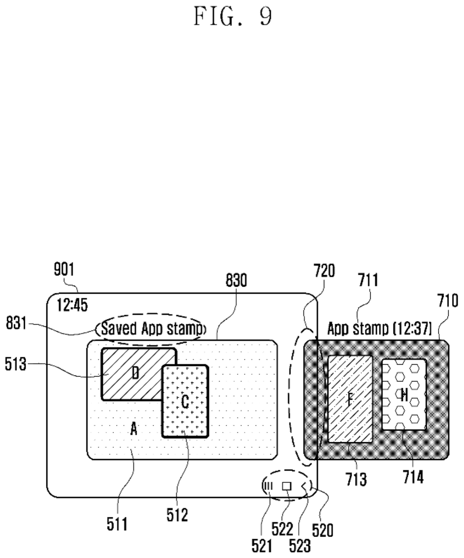

FIG. 9 illustrates an application group saved according to a task request different from an application group saved by a user in an electronic device 101 according to an embodiment of the disclosure.

The screen for the application group in FIGS. 5, 6, and 7A indicates a screen for the application group saved when another task (e.g., display of a home screen) is requested. FIGS. 8 and 9 illustrate an operation in which the electronic device 101 proposes to save a screen for an application group, and displays the screen for the saved application group upon the user's request to save the same. Screen 507 of FIG. 8 may be the same as screen 507 of FIG. 5.

Referring to FIG. 8 and FIG. 9, in screen 507, a recent screen 516 may include a first visual cue 570 and recent usage screens 571, 572, 573, 574, and 575. Upon receiving a user input 54 for the first visual cue 570 in screen 507, the electronic device 101 may be switched to screen 801 under the control of the processor 120.

In screen 507, the electronic device 101 may display virtual control buttons 520 on the display 210. The virtual control buttons 520 may include a recent screen button 521, a home screen button 522, and a back button 523.

In screen 507, the electronic device 101 may display a "Close all" 580 and an icon collection 560 corresponding to recently use screens 571, 572, 573, 574, and 575 on the display 210.

In screen 801, when a user input 54 for the first visual cue 570 is received, the electronic device 101 may display a screen 810 for a fifth application group. The screen 810 for the fifth application group may include a screen obtained by resizing (e.g., reducing) screen 501. The screen 810 for the fifth application group may further include a user interface 811 for saving, compared to the screen 590 for the first application group.

In an embodiment, the instructions stored in the memory 130, when executed individually or collectively by the at least one processor 120, may cause the electronic device 101 to determine that an application group is a frequently used application when the application group is saved according to a specified criterion (e.g., saving frequency), and display the user interface 811 for saving. When a user input for the user interface 811 for saving is received, the electronic device 101 may save the screen 810 for the fifth application group and display a sixth application group 830.

In screen 803, when the user input for the user interface 811 for saving is received, the electronic device 101 may display a screen 830 for the sixth application group. The screen 830 for the sixth application group may include a screen obtained by resizing (e.g., reducing) screen 501. The screen 830 for the sixth application group may include information 831 (e.g., saved app stamp) on a name of the saved application group. The saved app stamp may be changed according to the name of the application group.

In screens 507, 801, and 803, the electronic device 101 may display virtual control buttons 520 on the display 210. The virtual control buttons 520 may include a recent screen button 521, a home screen button 522, and a back button 523.

In screen 901, the instructions stored in the memory 130, when executed individually or collectively by the at least one processor 120, may cause the electronic device 101 to display the screen 830 for the sixth application group and the second visual cue 720 in the recent screen when a user input for the recent screen button 521 is received.

The second visual cue 720 may indicate that in addition to the screen 830 for the currently displayed sixth application group, there is a screen for an additional application group (e.g., the screen 710 for the second application group) not displayed on the display 210. The electronic device 101 may receive a user input for the user interface 811 for saving, and prioritize to display the screen 830 for the saved sixth application group on the display 210, over the screen 710 for the second application group. The screen 590 for the first application group may include a resized first window 511, a resized second window 512, and a resized third window 513. The screen 710 for the second application group may include a fourth window 713 and a fifth window 714.

The electronic device 101 may receive the user input for the user interface 811 for saving, perform control to prevent the screen 830 for the saved sixth application group from being deleted at a predetermined period or randomly, and display the same on the display 210.

In screen 901, the electronic device 101 may display virtual control buttons 520 on the display 210. The virtual control buttons 520 may include a recent screen button 521, a home screen button 522, and a back button 523.

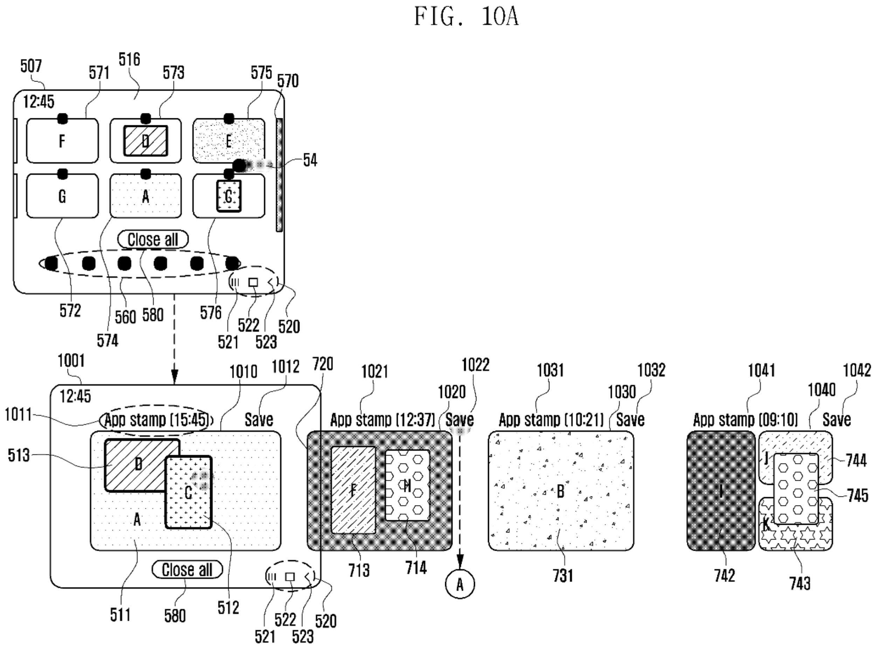

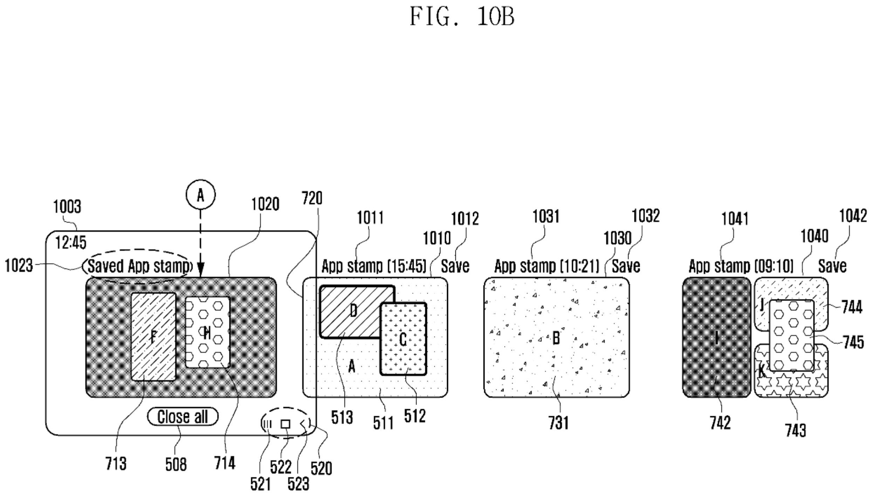

FIGS. 10A and 10B illustrate a method for saving a frequently used application group, and displaying the saved application group by an electronic device 101 according to an embodiment of the disclosure.

Screen 507 of FIG. 10A and FIG. 10B may be the same as screen 507 of FIG. 5.

Referring to FIGS. 10A and 10B, in screen 507, a recent screen 516 may include a first visual cue 570 and recently used screens 571, 572, 573, 574, and 575. When a user input 54 for the first visual cue 570 is received in screen 507, the instructions stored in the memory 130, when executed individually or collectively by the at least one processor 120, may cause the electronic device 101 to switch to screen 1001.

In screen 507, the electronic device 101 may display virtual control buttons 520 on the display 210. The virtual control buttons 520 may include a recent screen button 521, a home screen button 522, and a back button 523.

In screen 507, the electronic device 101 may display a "Close all" 580 and an icon collection 560 recently used screens 571, 572, 573, 574, and 575 on the display 210.

In screen 1001, when receiving a user input 54 for the first visual cue 570, the electronic device 101 may display a screen 1010 for a seventh application group and the second visual cue 720. The screen 1010 for the seventh application group may include a screen obtained by resizing (e.g., reducing) screen 501. The screen 1010 for the seventh application group may further include a user interface 811 for saving and information 1011 (e.g., app stamp (15:45)) on a time point at which the application group is saved, compared to the screen 590 for the first application group. The app stamp may be changed according to the name of the application group.

In screen 1001, the electronic device 101 may display virtual control buttons 520 and a "Close all" 580 on the display 210. The virtual control buttons 520 may include a recent screen button 521, a home screen button 522, and a back button 523.

In an embodiment, the second visual cue 720 may indicate that, in addition to the screen 1010 for the currently displayed seventh application group, there are screens 1020, 1030, and 1040 for additional application groups not displayed on the display 210. The second visual cue 720 may be a user interface for inducing a user to touch or use a screen 1020, 1030, or 1040 for at least one application group not displayed on the screen.

In an embodiment, a screen 1020 for an eighth application group may include a fourth window 713 and a fifth window 714. When a request to display another task (e.g., a home screen) occurs during the use of applications for the fourth window 713 and the fifth window 714, with respect to the screen 1020 for the eighth application group, the electronic device 101 may save, in the memory 130 or the window manager 203, a time point at which the request occurs and the application group. The screen 1020 for the eighth application group may include information 1021 (e.g., app stamp (12:37)) on the name of the application group and the saved time point. The app stamp may be changed according to the name of the application group. The screen 1020 for the eighth application group may further include a user interface 1022 for saving.

In an embodiment, a screen 1030 for a ninth application group may include a window 731 executed as a full screen. In an embodiment, the windows saved as an application group are described with reference to two or more windows, but the disclosure is not limited thereto, and one or more windows may also be saved as an application group.

In an embodiment, when a request to display another task (e.g., a home screen) occurs during the use of an application for the window 731 displayed as a full screen, with respect to the screen 1030 for the ninth application group, the electronic device 101 may save a time point at which the request occurs and the application group in the memory 130 or the window manager 203. The screen 1030 for the ninth application group may include information 731 (e.g., app stamp (10:21)) on the name of the application group and the saved time point. The app stamp may be changed according to the name of the application group. The screen 1030 for the ninth application group may further include a user interface 1032 for saving.

In an embodiment, a screen 1040 for a tenth application group may include windows 742, 743, and 744 displayed in a split screen and a pop-up window 745. The screen 1040 for the tenth application group may include information 741 (e.g., app stamp (09:10)) on the name of the application group and the saved time point. The app stamp may be changed according to the name of the application group. The screen 1040 for the tenth application group may further include a user interface 1042 for saving.

Referring to screens 1001 and 1003, when receiving a user input for the user interface 1022 for saving, which is included in the screen 1020 for the eighth application group, the electronic device 101 may display the screen 1030 for the eighth application group. The screen 1020 for the eighth application group may include information 1023 (e.g., "saved app stamp") on the name of the saved application group. The saved app stamp may be changed according to the name of the application group.

In an embodiment, the electronic device 101 may receive the user input for the user interface 811 for saving and prioritize to display, on the display 210, the screen 1020 for the saved eighth application group over the screen 1010 for the seventh application group, the screen 1030 for the ninth application group, and the screen 1040 for the tenth application group.

In an embodiment, the electronic device 101 may receive the user input for the user interface 811 for saving, perform control to prevent the screen 1020 for the saved eighth application group from being deleted at a predetermined period or randomly, and display the same on the display 210.

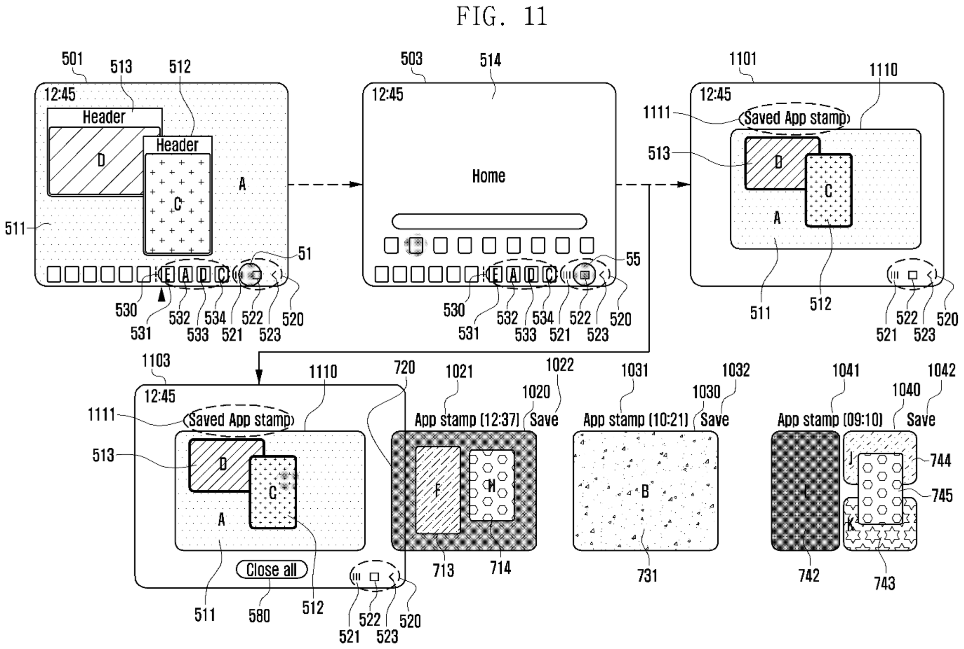

FIG. 11 illustrates a method in which an electronic device 101 saves a frequently used application group and displays the saved application group according to an embodiment of the disclosure.

FIGS. 10A and 10B illustrate an operation of saving an application group, based on a user interface for saving, included in the application group, but FIG. 11 illustrates an operation of saving an application group when a home screen button 522 is pressed for a predetermined time interval.

In screen 501, the electronic device 101 may display two or more windows on the display 210. A first window 511 corresponding to an execution screen of a first application may be displayed as a full screen. A second window 512 corresponding to an execution screen of a second application may be displayed as a pop-up window overlapping the first window 511. A third window 513 corresponding to an execution screen of a third application may be displayed as a pop-up window overlapping the first window 511, and at least a part thereof may overlap the second window 512.

In screen 501, the electronic device 101 may display virtual control buttons 520 and/or application icons 530 on the display 210. The virtual control buttons 520 and/or the application icons 530 may be arranged in the form of a dock at the edge or the bottom of screen 501. The virtual control buttons 520 and/or application icons 530 may be displayed in the taskbar.

In an embodiment, the virtual control buttons 520 may include a recent screen button 521, a home screen button 522, and a back button 523.

In an embodiment, the instructions stored in the memory 130, when executed individually or collectively by the at least one processor 120, may cause the electronic device 101 to display a recent screen when a user input for a recent screen button (e.g., the recent screen button 521 in FIG. 2) is received.

In an embodiment, the instructions stored in the memory 130, when executed individually or collectively by the at least one processor 120, may cause the electronic device 101 to display a home screen, when a user input 51 for a home screen button (the home screen button 522 of FIG. 2) is received.

In an embodiment, the instructions stored in the memory 130, when executed individually or collectively by the at least one processor 120, may cause the electronic device 101 to display a previous screen of the application currently being displayed on the display 210, when a user input for a back button (the back button 521 in FIG. 2) is received.

In an embodiment, the application icons 530 may include icons 531, 532, 533, and 534 corresponding to an application being executed in the foreground and/or an application being paused in the background. The icons 531, 532, 533, and 534 may include representative images of applications being executed in the foreground and/or applications being paused in the background.

In screen 501, the electronic device 101 may receive a user input 51 for a request to display a home screen (e.g., another task) while two or more windows are being displayed on the display 210. For example, a user input for the home screen button 522 may be the same as a user input for the request to display the home screen (e.g., another task).

In an embodiment, when receiving a user input for a request to display a home screen (e.g., another task), the electronic device 101 may, under the control of the processor 120, save the sizes and the positions on the current screen of the first window 511, the second window 512, and the third window 513, and save, in the memory 130 or the window manager 203, a time point at which the sizes and the positions on the current screen of the first window 511, the second window 512, and the third window 513 are saved.

In an embodiment, when receiving the user input for the request to display the home screen (e.g., another task), the electronic device 101 may, under the control of the processor 120, save the sizes and the positions on the current screen of the first window 511, the second window 512, and the third window 513 as an application group. The application group may include a screenshot for the sizes and the positions on the current screen of the first window 511, the second window 512, and the third window 513.

In screen 503, when receiving the user input 51 for the request to display the home screen (e.g., another tasks), the electronic device 101 may display a home screen 514 on the display 210. At least a part of the home screen 514 may include virtual control buttons 520 and/or application icons 530.

In screen 503, the electronic device 101 may display virtual control buttons 520 and/or application icons 530 on the display 210. The virtual control buttons 520 and/or application icons 530 may be arranged in the form of a dock at the edge or the bottom of the screen 503. The virtual control buttons 520 and/or the application icons 530 may be displayed in the taskbar.

In screen 503, when a user input 55 of long-pressing a home screen button 521 is received, the electronic device 101 may, under the control of the processor 120, save screen 501 as an application group screen.

In screen 1101, when a user input of long-pressing the home screen button 521 is received, the instructions stored in the memory 130, when executed individually or collectively by the at least one processor 120, may cause the electronic device 101 to save a screen 1110 for the 11^{th} application group in the memory 130 or the window manager 203. The screen 1110 for the 11^{th} application group may include a screen obtained by resizing (e.g., reducing) screen 501. The screen 1110 for the 11^{th} application group may include information 1111 (e.g., saved app stamp) on the name of the saved application group. The saved app stamp may be changed according to the name of the application group.

In screen 1103, when the instructions stored in the memory 130, when executed individually or collectively by the at least one processor 120, may cause the electronic device 101 to display a recent screen on the display 210 according to a user input. When displaying the recent screen, the electronic device 101 may prioritize to display a screen 1110 for the 11^{th} saved application group according to a user input over other screens. When recently displaying the screen, the electronic device 101 may display the "Close all" 580 and the second visual cue 720 together with the screen 1110 for the 11^{th} application group. When displaying the recent screen, the electronic device 101 may perform control to prevent the screen 1110 for the 11^{th} saved application group from being deleted at a predetermined period or randomly, according to user input, and display the same on the display 210.

In an embodiment, the second visual cue 720 may indicate that in addition to the screen 1110 for the currently displayed 11^{th} application group, there are also other screens 1020, 1030, and 1040 for additional application groups not displayed on the display 210. The second visual cue 720 may be a user interface for inducing the user to touch or use the screen 1020, 1030, or 1040 for the at least one application group not displayed on the screen.

In an embodiment, the electronic device 101 may receive a user input of long-pressing the home screen button 521, and prioritize to display, on the display 210, the screen 1110 for the 11^{th} saved application group over the screen 1010 for the 7^{th} application group, the screen 1030 for the 9^{th} application group, and the screen 1040 for the 10^{th} application group. The electronic device 101 may receive a user input 55 of long-pressing the home screen button 521, perform control to prevent the screen 1110 for the 11^{th} saved application group from being deleted at a predetermined period or randomly, and display the same on the display 210.

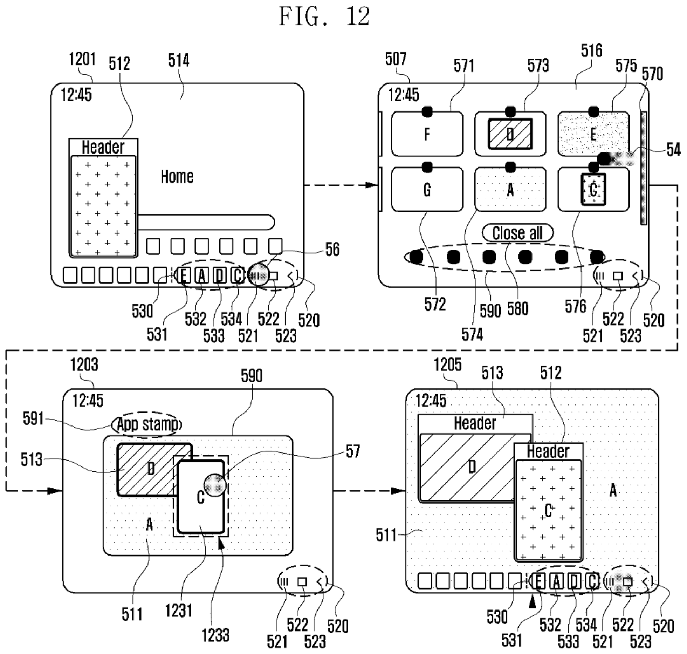

FIG. 12 illustrates a recent screen display method of an electronic device 101 according to an embodiment of the disclosure when a window corresponding to an application being executed is included in an application group.

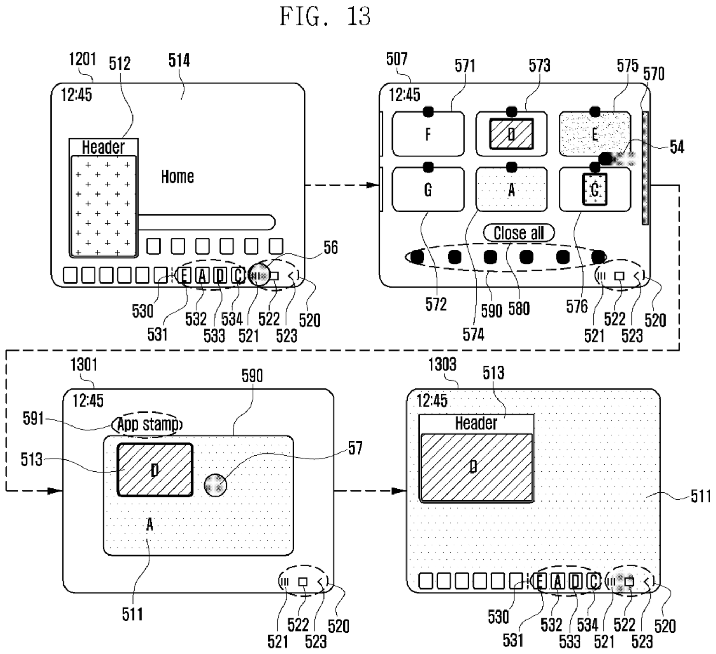

FIG. 13 illustrates a recent screen display method of an electronic device 101 according to an embodiment of the disclosure when a window corresponding to an application being executed is included in an application group.

Referring to FIG. 12, in screen 1201, the electronic device 101 may display, on the display 210, a second window 512 corresponding to an execution screen of a second application as a pop-up window.

In screen 1201, the electronic device 101 may display virtual control buttons 520 and/or application icons 530 on the display 210. The virtual control buttons 520 and/or application icons 530 may be arranged in the form of a dock at the edge or the bottom of screen 501. The virtual control buttons 520 and/or the application icons 530 may be displayed in the taskbar.

In an embodiment, the virtual control buttons 520 may include a recent screen button 521, a home screen button 522, and a back button 523.

In screen 507, when receiving a user input 56 for a request to display a recent screen, the electronic device 101 may display a recent screen 516 on the display 210.

In an embodiment, the recent screen 516 may include a first visual cue 570 and recently used screens 571, 572, 573, 574, and 575.

In an embodiment, the recently used screens 571, 572, 573, 574, and 575 may display representative images (e.g., icons) indicating at least a part of each task detail and each application.

In an embodiment, the recent screen 516 may include a "Close all" 580 and an icon collection 560 corresponding to the recently use screens 571, 572, 573, 574, and 575. When an application corresponding to the icon collection 560 is selected, the electronic device 101 may display a window corresponding to the selected application on the display 210.

In screen 1203, when a user input 54 for the first visual cue 570 is received, the electronic device 101 may display a screen 590 for a first application group. The screen 590 for the first application group may include information 591 on a name of the application group. The screen 590 for the first application group may include a resized first window 511, a resized second window 512, and a resized third window 513. The positions and sizes of the resized first window 511, the resized second window 512, and the resized third window 513 may be adjusted by a ratio, based on the positions and sizes of the first window 511, the second window 512, and the third window 513 displayed in screen 501.

In screen 1203, when the second window 512 is already being executed or displayed, the electronic device 101 may display, under the control of the processor 120, a user interface 1233 and/or a visual effect 1231 for highlighting the portion corresponding to the second window 512 in screen 590 for the first application group.

In screen 1205, when a user input 57 for selecting the screen 590 for the first application group is received, the second window 512 may include the contents being already executed or displayed, and the other windows 511 and 513 may be displayed together.

Referring to FIG. 13, in screen 1301, upon receiving a user input 54 for the first visual cue 570, the electronic device 101 may display a screen 590 for the first application group. The screen 590 for the first application group may include information 591 on a name of the application group. The screen 590 for the first application group may include the resized first window 511 and the resized second window 512.

In screen 1301, the second window 512 is already being executed or displayed, and thus the instructions stored in the memory 130, when executed individually or collectively by the at least one processor 120, may cause the electronic device 101 to hide a portion corresponding to the second window 512 in the screen 590 for the first application group.

In screen 1303, when a user input 57 for selecting the screen 590 for the first application group is received, the instructions stored in the memory 130, when executed individually or collectively by the at least one processor 120, may cause the electronic device 101 to hide the second window 512 and to display the other windows 511 and 513 on the display 120.

In screens 1203, 1205, 1301, and 1303, the electronic device 101 may display virtual control buttons 520 on the display 210. The virtual control buttons 520 may include a recent screen button 521, a home screen button 522, and a back button 523.

In screens 1203 and 1303, the electronic device 101 may display application icons 530 on the display 210. The application icons 530 may include icons 531, 532, 533, and 534 corresponding to applications being executed in the foreground and/or applications being paused in the background. The icons 531, 532, 533, and 534 may include representative images of applications being executed in the foreground and/or applications being paused in the background.

FIG. 14 illustrates a method in which an electronic device 101 displays information on an application group as an icon according to an embodiment of the disclosure.

In screen 501, the electronic device 101 may display two or more windows on the display 210. A first window 511 corresponding to an execution screen of a first application may be displayed as a full screen. A second window 512 corresponding to an execution screen of a second application may be displayed as a pop-up window overlapping onto the first window 511. A third window 513 corresponding to an execution screen of a third application may be displayed as a pop-up window overlapping onto the first window 511, and at least a part thereof may overlap the second window 512.

In screen 501, the electronic device 101 may display virtual control buttons 520 and/or application icons 530 on the display 210. The virtual control buttons 520 and/or the application icons 530 may be arranged in the form of a dock at the edge or the bottom of screen 501. The virtual control buttons 520 and/or the application icons 530 may be displayed in the taskbar.

In an embodiment, the virtual control buttons 520 may include a recent screen button 521, a home screen button 522, and a back button 523.

In an embodiment, the instructions stored in the memory 130, when executed individually or collectively by the at least one processor 120, may cause the electronic device 101 to display a recent screen when a user input for a recent screen button (e.g., the recent screen button 521 of FIG. 2) is received.

In an embodiment, the instructions stored in the memory 130, when individually or collectively executed by the at least one processor 120, may cause the electronic device 101 to display a home screen when a user input for the home screen button (the home screen button 522 in FIG. 2) is received.

In an embodiment, the instructions stored in the memory 130, when individually or collectively executed by the at least one processor 120, may cause the electronic device 101 to display a previous screen of the application being displayed on the display 210 when a user input for a back button (the back button 521 of FIG. 2) is received.

In an embodiment, the application icons 530 may include icons 531, 532, 533, and 534 corresponding to applications being executed in the foreground and/or applications being paused in the background. The icons 531, 532, 533, and 534 may include representative images of the applications being executed in the foreground and/or applications being suspended in the background.

In screen 501, the electronic device 101 may receive a user input 51 for a request to display a home screen (e.g., another task) while two or more windows are displayed on the display 210. For example, a user input for the home screen button 522 may be the same as a user input for requesting to display the home screen (e.g., another task).

In an embodiment, when the user input 51 for the request to display the home screen (e.g., another task) is received, the instructions stored in the memory 130, when individually or collectively executed by the at least one processor 120, may cause the electronic device 101 to save the sizes and the positions on the current screen of the first window 511, the second window 512, and the third window 513, and save, in the memory 130 or the window manager 203, a time point at which the sizes and the positions on the current screen of the first window 511, the second window 512, and the third window 513 are saved.

In an embodiment, when a user input for a request to display a home screen (e.g., another task) is received, the instructions stored in the memory 130, when individually or collectively executed by the at least one processor 120, may cause the electronic device 101 to save the sizes and the positions on the current screen of the first window 511, the second window 512, and the third window 513 as an application group. The application group may include a screenshot for the sizes and the positions on the current screen of the first window 511, the second window 512, and the third window 513.

In screen 1401, when receiving a user input for a request to display a home screen (e.g., another task), the electronic device 101 may display a home screen 514 on the display 210. At least a part of the home screen 514 may include virtual control buttons 520 and/or application icons 530. The application group is saved together with the home scree 514 on the display 210, and the electronic device 101 may display, in the taskbar, an application group icon 1411 capable of immediately displaying an application group when the user input is received.

In screen 1403, when receiving the user input for the request to display the home screen (e.g., another task), the electronic device 101 may display the home screen 514 on the display 210. At least a part of the home screen 514 may include the virtual control buttons 520 and/or application icons 530. The application group is saved together with the home screen 514 on the display 210, and the electronic device 101 may display a floating application group icon 1431 capable of immediately displaying an application group when the user input is received.

In screens 1401 and 1403, the application icons 530 may include icons 531, 532, 533, and 534 corresponding to applications being executed in the foreground and/or applications being paused in the background. The icons 531, 532, 533, and 534 may include representative images of the applications running in the foreground and/or the applications paused in the background. When receiving the user input for the first application icon 531, an execution screen 1451 corresponding to the first application icon 531 and the screen 1405 may be displayed. The execution screen 1451 may be a window that is executed in a full screen.

In an embodiment, a method for displaying a recent screen of an electronic device 101 may include displaying two or more windows on a display 210, in case that a first user input for requesting another task is received, saving the two or more windows as an application group and displaying the other task, in case that a second user input for requesting display of a recent screen is received, displaying one or more recently used screens and a visual cue 570 related to the saved application group on the recent screen, and in case that a third user input for the visual cue 570 is received, displaying a screen regarding the application group on the display 210, wherein each of the one or more recently used screens corresponds to an execution screen of one application, and the screen regarding the application group corresponds to execution screens of at least two applications.

In an embodiment, the method further includes in case that a fourth user input for selecting the screen regarding the application group is received, displaying two or more windows corresponding to the saved application group.

In an embodiment, the application group may include information on a position on the display 210 for each window included in the two or more windows and information on a size of each window.

In an embodiment, the other task may include display of a home screen, display of the recent screen, or execution of a new application.

In an embodiment, the displaying of the screen regarding the application group on the display 210 may include receiving a user input for a user interface related to saving, and prioritizing to display the screen regarding the saved application group.

In an embodiment, the displaying of the screen regarding the application group on the display 210 may include receiving a user input for a home screen button, and prioritizing to display the screen regarding the saved application group.

In an embodiment, the displaying of the screen regarding the application group on the display 210 may further include displaying information on a name of the application group and text information related to a time point at which the screen is saved.

In an embodiment, the displaying of the screen regarding the application group on the display 210 may further include in case that there is a window corresponding to a currently executed application among windows included in the screen regarding the application group, hiding the window corresponding to the currently executed application and displaying the screen regarding the application group.

In an embodiment, the displaying of the screen regarding the application group on the display 210 may further include in case that there is a window corresponding to a currently executed application among windows included in the screen regarding the application group, displaying a user interface and/or a visual effect highlighting the window corresponding to the currently executed application.

In an embodiment, the method may further include in case that the second user input for requesting the display of the recent screen is received, displaying, on the display 210, the one or more recently used screens and the screen regarding the application group on the recent screen.

In an embodiment, an electronic device 101 may include a memory, a display 210, and at least one processor 120, wherein instructions stored in the memory 130, when individually or collectively executed by the at least one processor 120, cause the electronic device 101 to display two or more windows on the display 210, in case that a first user input for requesting another task is received, save the two or more windows as an application group and display the other task, in case that a second user input for requesting display of a recent screen is received, display one or more recently used screens and a visual cue 570 related to the saved application group on the recent screen, and in case that a third user input for the visual cue 570 is received, display a screen regarding the application group on the display 210, wherein each of the one or more recently used screens corresponds to an execution screen of one application, and the screen regarding the application group corresponds to execution screens of at least two applications.

In an embodiment, the instructions stored in the memory 130, when individually or collectively executed by the at least one processor 120, cause the electronic device 101 to, in case that a fourth user input for selecting the screen regarding the application group is received, display two or more windows corresponding to the saved application group.

In an embodiment, the instructions stored in the memory 130, when individually or collectively executed by the at least one processor 120, cause the electronic device 101 to receive a user input for a user interface related to saving, and prioritize to display the screen regarding the saved application group.

In an embodiment, the instructions stored in the memory 130, when individually or collectively executed by the at least one processor 120, cause the electronic device 101 to receive a user input for a home screen button, and prioritize to display the screen regarding the saved application group.

In an embodiment, the instructions stored in the memory 130, when individually or collectively executed by the at least one processor 120, cause the electronic device 101 to control information on a name of the application group and text information related to a time point at which the screen is saved to be displayed.

In an embodiment, the instructions stored in the memory 130, when individually or collectively executed by the at least one processor 120, cause the electronic device 101 to, in case that there is a window corresponding to a currently executed application among windows included in the screen regarding the application group, hide the window corresponding to the currently executed application and display the screen regarding the application group.

In an embodiment, the instructions stored in the memory 130, when individually or collectively executed by the at least one processor 120, cause the electronic device 101 to, in case that there is a window corresponding to a currently executed application among windows included in the screen regarding the application group, display a user interface and/or a visual effect highlighting the window corresponding to the currently executed application.

In an embodiment, the instructions stored in the memory 130, when individually or collectively executed by the at least one processor 120, cause the electronic device 101 to, in case that the second user input for requesting the display of the recent screen is received, display, on the display 210, the one or more recently used screens and the screen regarding the application group on the recent screen.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method for displaying a recent screen of an electronic device, the method comprising:
displaying two or more windows on a display;
in case that a first user input for requesting another task is received, saving the two or more windows as an application group and displaying the other task;
in case that a second user input for requesting display of a recent screen is received, displaying one or more recently used screens and a visual cue regarding the saved application group on the recent screen; and
in case that a third user input for the visual cue is received, displaying a screen regarding the application group on the display,
wherein each of the one or more recently used screens corresponds to an execution screen of one application, and the screen regarding the application group corresponds to execution screens of at least two applications.

2. The method of claim 1, further comprising in case that a fourth user input for selecting the screen regarding the application group is received, displaying two or more windows corresponding to the saved application group.

3. The method of claim 1, wherein the application group comprises information on a position of each window, included in the two or more windows, on the display and information on a size of each window, and
wherein the other task comprises display of a home screen, display of the recent screen, or execution of a new application.

4. The method of claim 1, wherein the displaying of the screen regarding the application group on the display comprises:
receiving a user input for a saving-related user interface and preferentially displaying the screen regarding the saved application group; and
receiving a user input for a home screen button and preferentially displaying the screen regarding the saved application group.

5. The method of claim 1, wherein the displaying of the screen regarding the application group on the display further comprises displaying information on a name of the application group and text information on a time point at which the screen is saved.

6. The method of claim 1, wherein the displaying of the screen regarding the application group on the display further comprises, in case that there is a window corresponding to a currently executed application among windows included in the screen regarding the application group, hiding the window corresponding to the currently executed application and displaying the screen regarding the application group.

7. The method of claim 1, wherein the displaying of the screen regarding the application group on the display further comprises, in case that there is a window corresponding to a currently executed application among windows included in the screen regarding the application group, displaying a user interface and/or a visual effect highlighting the window corresponding to the currently executed application.

8. The method of claim 1, further comprising, in case that the second user input for requesting the display of the recent screen is received, displaying, on the display, the one or more recently used screens and the screen regarding the application group on the recent screen.

9. An electronic device comprising:
a memory;
a display; and
at least one processor,
wherein instructions stored in the memory, when individually or collectively executed by the at least one processor, cause the electronic device to:
display two or more windows on the display;
in case that a first user input for requesting another task is received, save the two or more windows as an application group and display the other task;
in case that a second user input for requesting display of a recent screen is received, display one or more recently used screens and a visual cue regarding the saved application group on the recent screen; and
in case that a third user input for the visual cue is received, display a screen regarding the application group on the display, and
wherein each of the one or more recently used screens corresponds to an execution screen of one application, and the screen regarding the application group corresponds to execution screens of at least two applications.

10. The electronic device of claim 9, wherein the instructions, when individually or collectively executed by the at least one processor, cause the electronic device to, in case that a fourth user input for selecting the screen regarding the application group is received, display two or more windows corresponding to the saved application group.

11. The electronic device of claim 9, wherein the application group comprises information on a position of each window, included in the two or more windows, on the display and information on a size of each window, and
wherein the other task comprises display of a home screen, display of the recent screen, or execution of a new application.

12. The electronic device of claim 9, wherein the instructions, when individually or collectively executed by the at least one processor, cause the electronic device to:
receive a user input for a saving-related user interface and preferentially displaying the screen regarding the saved application group;
receive a user input for a home screen button and preferentially displaying the screen regarding the saved application group; and
display information on a name of the application group and text information on a time point at which the screen is saved.

13. The electronic device of claim 9, wherein the instructions, when individually or collectively executed by the at least one processor, cause the electronic device to, in case that there is a window corresponding to a currently executed application among windows included in the screen regarding the application group, hide the window corresponding to the currently executed application and display the screen regarding the application group.

14. The electronic device of claim 9, wherein the instructions, when individually or collectively executed by the at least one processor, cause the electronic device to, in case that there is a window corresponding to a currently executed application among windows included in the screen regarding the application group, display a user interface and/or a visual effect highlighting the window corresponding to the currently executed application.

15. The electronic device of claim 9, wherein the instructions, when individually or collectively executed by the at least one processor, cause the electronic device to, in case that the second user input for requesting the display of the recent screen is received, display, on the display, the one or more recently used screens and the screen regarding the application group on the recent screen.
